# EUROPEAN PATENT SPECIFICATION

(11) **EP 1 479 873 B1**
(45) Date of publication and mention of the grant of the patent: **26.06.2013**
(21) Application number: 04012098.2
(22) Date of filing: 21.05.2004
(51) Int. Cl.: F01D 25/14, F02C 7/16, F01D 9/04, F01D 25/12

(54) **Steam turbine**
Dampfturbine
Turbine à vapeur

(30) Priority: 20.05.2003 JP 2003142125
(43) Date of publication of application: 24.11.2004
(73) Proprietor: Kabushiki Kaisha Toshiba, Minato-ku Tokyo (JP)
(72) Inventor: Nagane, Kohei, Minato-ku Tokyo (JP); Yamashita, Katsuya, Minato-ku Tokyo (JP); Shinozaki, Yukio, Minato-ku Tokyo (JP)
(74) Representative: HOFFMANN EITLE

(56) References cited:
- JP-A- 58 174 106
- JP-A- 61 138 804
- US-A- 2 815 645
- US-A- 4 498 301

## Description

### FIELD OF THE INVENTION

This invention relates to a steam turbine, and in particular a steam turbine that permits operation with an increased steam temperature.

### DESCRIPTION OF THE BACKGROUND

Recently, for steam turbine plants, increasing the temperature of steam has been discussed to improve the thermal efficiencies of plants.

Conventional steam turbine plants generally introduce a one-stage reheating configuration using reheated steam. In the steam turbine plant with the one-stage reheating configuration, steam at a temperature of about 538°C (1000 degrees Fahrenheit) is used for a high pressure turbine, while steam at a temperature of 538°C or 566°C (1000 or 1050 degrees Fahrenheit) is used for an intermediate pressure turbine as reheated steam.

According to the Rankine cycle, which is a thermal cycle generally used in a steam turbine plant, when the steam temperature is increased, the plant thermal efficiency can be more improved.

A conventional high pressure turbine and intermediate pressure turbine for a steam turbine plant is described in Japanese Patent Application (Kokai) No. 11-350911. In this publication, the intermediate pressure turbine uses steam at a temperature about 593°C (1100 degrees Fahrenheit) as reheated steam, the turbine having a reheated steam supply tube with a steam-cooled double-tubing structure.

However, such a system cannot effectively operate with a temperature of the reheated steam above about 700°C (1300 degrees Fahrenheit), and there remain problems to be solved.

To supply such high temperature steam in a steam turbine, it is being investigated adopting a nozzle box even in a intermediate pressure turbine.

A nozzle box is a chamber for steam that is supplied from a boiler or the like and supplying those steam to turbine stages. A nozzle box also has a function to avoid constituent components surrounding the nozzle box from directly being exposed to a high temperature steam.

Conventionally, high pressure steam turbine has a nozzle box in a inlet side of steam, however, it is designed to maintain a strength with steam at a temperature of 566°C to 593°C (1050 to 1100 degrees Fahrenheit). It is difficult to maintain a strength with steam at a temperature of 700°C or above (1300 degrees or above Fahrenheit) for a conventional nozzle box. And for those high temperature steam, a radiation problem is to be considered. When adopting steam at about 700°C (1300 degrees Fahrenheit), a heat transfer by radiation is not negligible because a temperature of outer surfaces of the nozzle box becomes high. The radiation heat heats up constituent components, such as a casing and a turbine rotor, that are provided around the nozzle box.

JP 61 138 804 discloses a cooling system for a steam turbine. A steam turbine comprises a heat-insulating plate which is installed in a space between a nozzle box and an inner casing and further comprises a cooling chamber.

JP 58 174 106 describes a steam turbine unit comprising an annular cooling passage surrounded by an outside casing into which steam flows due to a swirl-flow component.

### SUMMARY OF THE INVENTION

Accordingly, an advantage of an aspect of the present invention is to provide a steam turbine that can effectively operate with the steam at the higher temperatures, while maintaining the strength of turbine constituent components despite the high steam temperature of the steam.

To achieve the above advantage, one aspect of the present invention is to provide a steam turbine according to claim 1 that comprises a casing, a rotor rotatably installed in the casing, a plurality of turbine stages disposed in the turbine, at least one of the turbine stages including a turbine nozzle and including a moving blade that is fixed to the rotor, a steam pass including the at least one turbine stage, a nozzle box, which is placed in a space between the casing and the rotor, for providing a heated steam into the steam pass, wherein the nozzle box has a wall, and a cover plate, which is arranged along an outer face of the wall of the nozzle box. The steam turbine further comprises a cooling steam path in the wall, a cooling steam outlet port provided in the wall, which passes a cooling steam inside the cooling steam path to a space between the wall and the cover plate, and a support which fixes the cover plate in a predetermined distance from the nozzle box.

Further features, aspects and advantages of the present invention will become apparent from the detailed description of preferred embodiments that follows, when considered together with the accompanying figures.

### BRIEF DESCRIPTION OF THE DRAWINGS

Fig. 1 is a schematic vertical cross sectional view showing an embodiment of a steam turbine according to the present invention.
Fig. 2 is a schematic cross sectional view showing a nozzle box applied in the embodiment of a steam turbine.
Fig. 3 is an enlarged schematic sectional view showing the "X" part on the Fig. 2.
Figs. 4 to 6 are enlarged schematic sectional views showing modifications of the first embodiment.
Fig. 7 is a schematic cross sectional view showing a nozzle' box applied in the embodiment of a steam turbine.
Fig. 8 is an enlarged schematic perspective view showing the "Y" part on the Fig. 7.
Figs. 9 and 10 are enlarged schematic sectional views showing modifications of the first embodiment.
Figs. 11 and 12 are enlarged schematic perspective views showing modifications of the first embodiment.
Fig. 13 is a chart comparing a temperature distribution between a nozzle box and a turbine rotor in a steam turbine according to the embodiment.
Fig. 14 is a schematic diagram of a example of a steam turbine plant that is suitable to adopt a steam turbine of the embodiment according to the invention.
Fig. 15 is a schematic diagram of another example of a steam turbine plant that is suitable to adopt a steam turbine of the embodiment according to the invention.

### DETAILED DESCRIPTION OF THE PREFERRED EMBODIMENTS

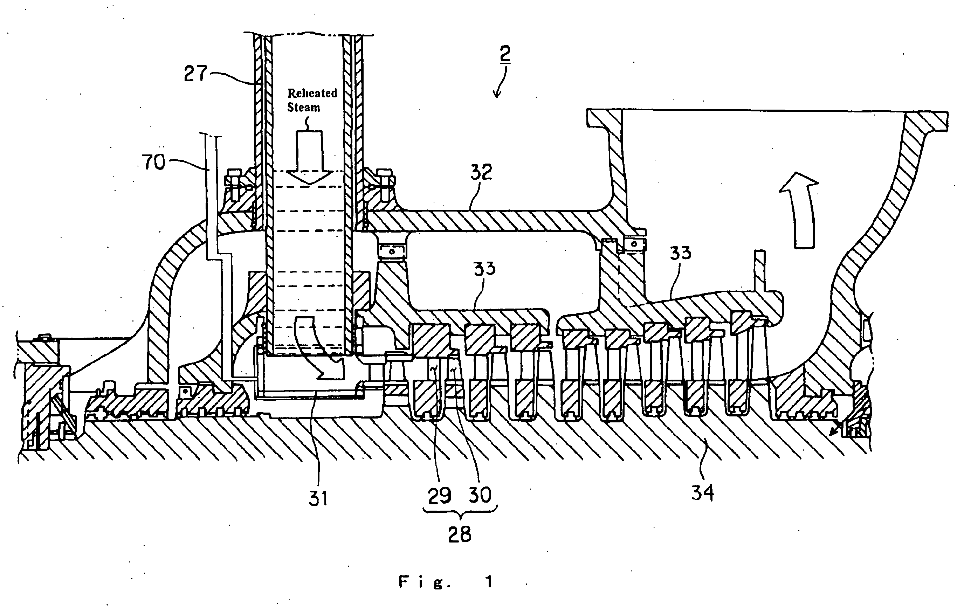

An embodiment in accordance with the present invention will be explained with reference to Figs. 1 to 14. Fig. 1 is a schematic vertical cross sectional view showing an embodiment of a steam turbine according to the present invention.

What is described in this embodiment is an example of applying a steam turbine according to the present invention to an intermediate turbine of a steam turbine plant.

As shown in Fig. 1, an intermediate pressure turbine 2 has a double casing structure including an outer casing 32 and an inner casing 33.

A turbine rotor 34 is rotatably installed in inner casing 33. Turbine rotor 34 has a plurality of moving blades 30. Inner casing 33 supports a plurality of nozzles 29 by nozzle diaphragm in its inside portion.

Nozzle 29 and moving blade 30 are adjacently arranged to each other in its radial position against the center axis of turbine rotor 34. A turbine stage 28 consist of one nozzle 29 and one moving blade 30. A plurality of the turbine stage 28 are provided as a steam pass, which is a pathway of high temperature steam introduced to intermediate pressure turbine 2.

A nozzle box 31 is provided in a space between turbine rotor 34 and inner casing 33, as it surrounds turbine rotor 34. Intermediate pressure turbine 2 has steam inlet tube 27, which supplies high temperature steam, which is reheated steam in this example, to the nozzle box 31. Nozzle box 31 is a steam chamber that supplies high temperature steam from steam inlet tube 27 to turbine stages 28, which is the steam pass. The cooling steam is supplied to nozzle box 31 by cooling steam line 70.

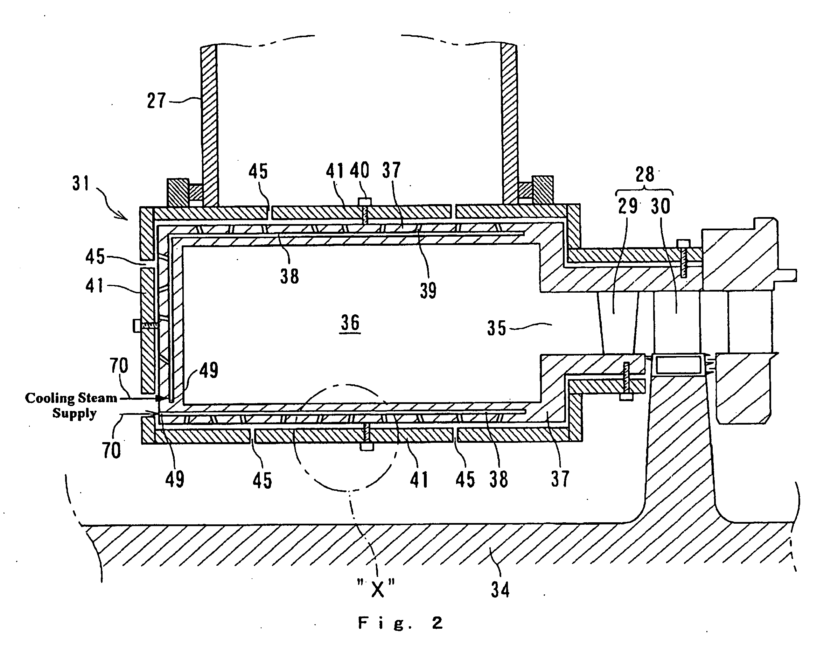

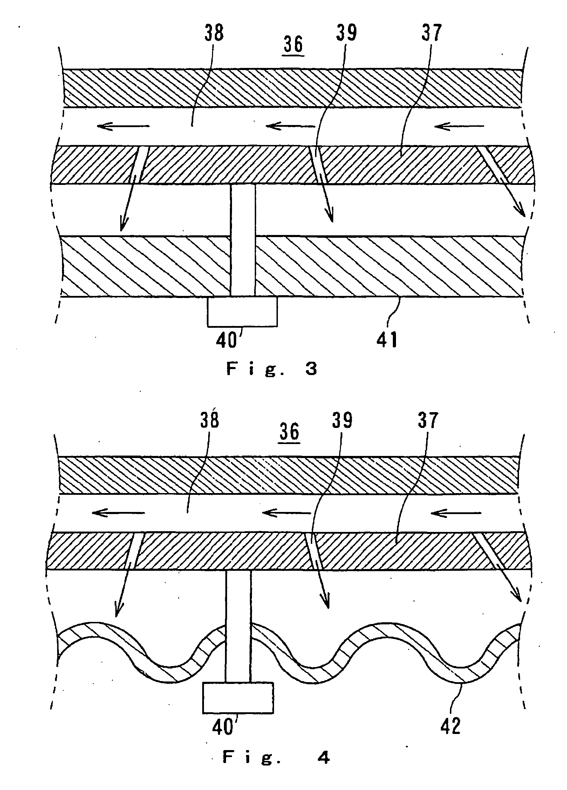

Fig. 2 shows, in a cross sectional view, a more detailed depiction of the nozzle box 31 of the intermediate pressure turbine 2 according to the embodiment of the invention. Fig. 3 is an enlarged schematic sectional view showing the "X" part on the Fig. 2.

As shown in Figs. 2 and 3, nozzle box 31 has a square like shape in a cross section, surrounded by a wall 37. Inside the wall 37 is a steam chamber 36.

Steam supply tube 27 is connected to an upper face, which is a outer circumferential face, of the wall 37 of nozzle box 31. To supply high temperature steam to turbine stages 28, nozzle port 35 is formed in another face of wall 37, which fronts onto turbine stage 28. A cooling steam path 38 is formed inside wall 37. A cooling steam inlet 49, which supplies the cooling steam into cooling steam path 38, is provided in wall 37. Cooling steam outlet ports 39, which are openings that pass the cooling steam inside the cooling steam path 38 through outside of wall 37, are also provided in wall 37. Cooling steam supply line 70 is connected to cooling steam inlet 49.

A plurality of cover plate 41 is arranged along an outer face of wall 37 of nozzle box 31. Cover plates 41 are supported by a support 40, as they leave a space between walls 37 of nozzle box 31. In other words, support 40 fixes cover plate 41 in a predetermined distance from wall 37. In this embodiment, cover plates 41 are arranged to cover the whole surface of.nozzle box 31, however having a cooling steam outlet openings 45. In other words, cover plates 41 intermittently cover the whole of nozzle box 31. A cooling steam outlet opening 45 is provided in cover plate 41 to pass the cooling steam in a space between walls 37 and cover plate 41 through outside of the.cover plate 41. Cooling steam outlet opening 45 may be formed by utilizing a gap between the cover plate 41.

For cover plate 41, such as heat-resistant flat plate may be used. Since cover plate 41 is accommodated on nozzle box 31 by support 40, the material of the cover plate 41 may preferably be the same material of the nozzle box 31 when considered thermal expansion of the material. Austenite type alloy, such as SUS 310, may be used as cover plate, because it has an advantage of antioxidation.

As shown in Fig. 3, the cooling steam, which is supplied to cooling steam path 38 from cooling steam inlet 49, cools the wall 37 while it flows inside steam path 38. The cooling steam then flows out from steam path toward cover plates 41 via cooling steam outlet port 39, and finally flows outside of cover plates 41 via cooling steam outlet opening 45, toward such as turbine rotor 34.

Cover plate 41 shown in Fig. 3 is a flat plate, however it may be a wave-shaped plate 42 as shown in Fig. 4. Fig. 4 is a enlarged schematic sectional view of a corresponding part as the "X" part shown in Fig. 2 when wave-shaped plate 42 is applied to the embodiment. Wave-shaped plate 42 as the cover plate may not only effectively absorb a thermal expansion of the cover plate caused by a high temperature, but may also improve a heat transfer coefficient because it has larger surface area than the flat plate.

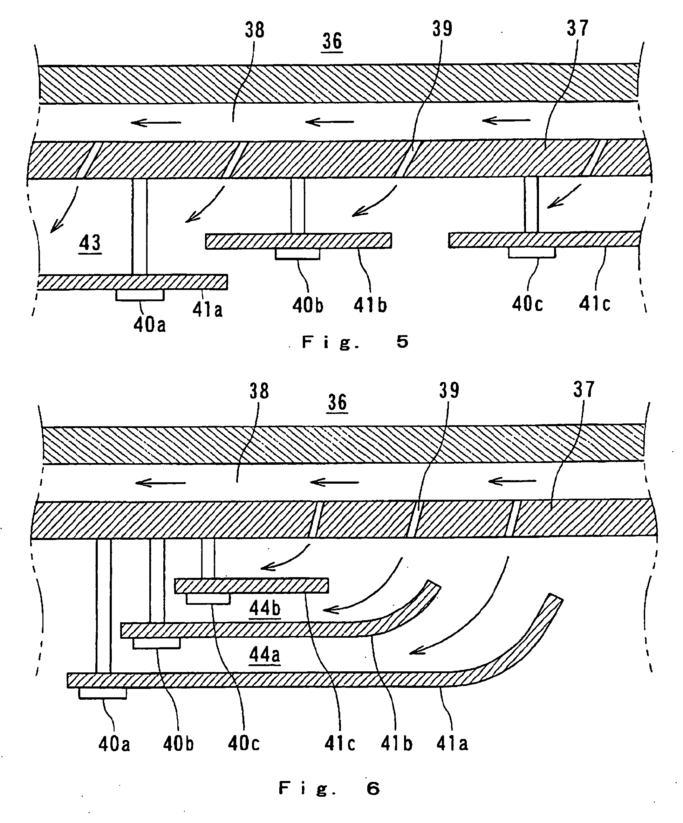

In this embodiment, cover plates 41 are supported and arranged by supports 40 in a same distance from wall 37 of the nozzle box 31, it may be arranged as some of a cover plate 41a with a support 41a have a larger distance from wall 37 than other cover plates 41b and 41c, which are supported by respective support 40b and 40c, as shown in Fig. 5. In this modification, the pressure of the cooling steam, which flows out from cooling steam outlet port 39 at a portion of cover plate 41a, may be recovered more than other portions.

Further, as shown in Fig. 6, cover plates 41c, 41b, and 41a may be arranged as the distance from the wall 37 may be gradually enlarged from one side to the another by supports 40c, 40b, and 40a. This may form layers of the cover plates 41c, 41b, and 41a above wall 37, which can be used as outside cooling steam paths 44a and 44b as the cooling steam from cooling steam outlet port 39 cools both face of cover plates 41b and 41c.

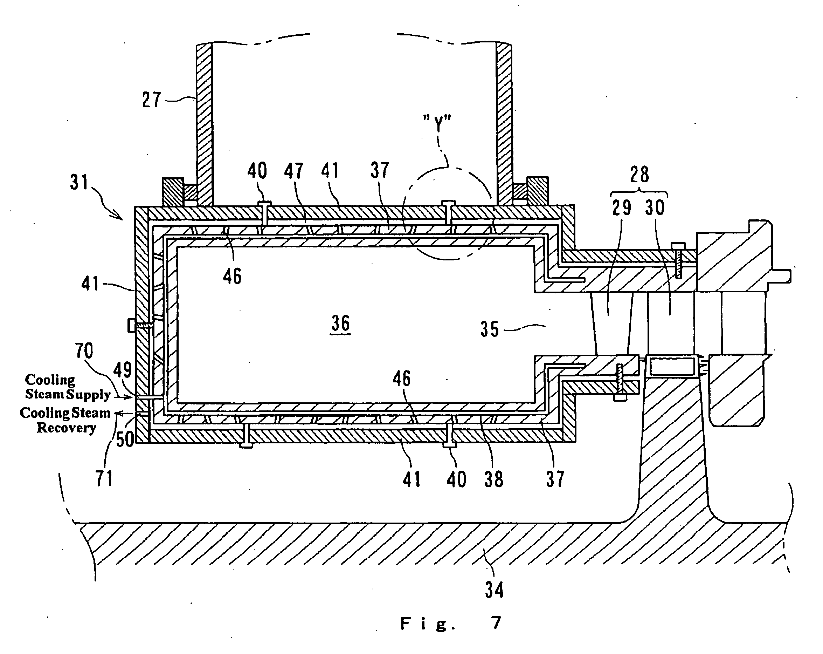

Fig 7 is a schematic cross sectional view showing a modification of a whole of the nozzle box applied in the embodiment of a steam turbine.

As shown in Fig. 7, cover plates 41 is arranged as it encloses the outside of wall 37 of nozzle box 31. Cover plates 41 are also supported by a support 40 as shown in Fig. 2. Cooling steam outlet ports 46 are also provided in wall 37 to pass the cooling steam from cooling steam path 38 to a space 47 between wall 37 and cover plates 41. Cooling steam inlet 49, which supplies the cooling steam to cooling steam path 38, is provided in wall 37. Cooling steam outlet 50, which recovers the cooling steam from the space 47, is provided in a cover plate 41. Cooling steam supply line 70 is connected to cooling steam inlet 49 and cooling steam recovery line 71 is connected to cooling steam outlet 50. With this modification, recovered cooling steam, which is the cooling steam recovered after cooled wall 37 and cover plates 41, may be utilized for other constituent components of a steam turbine plant.

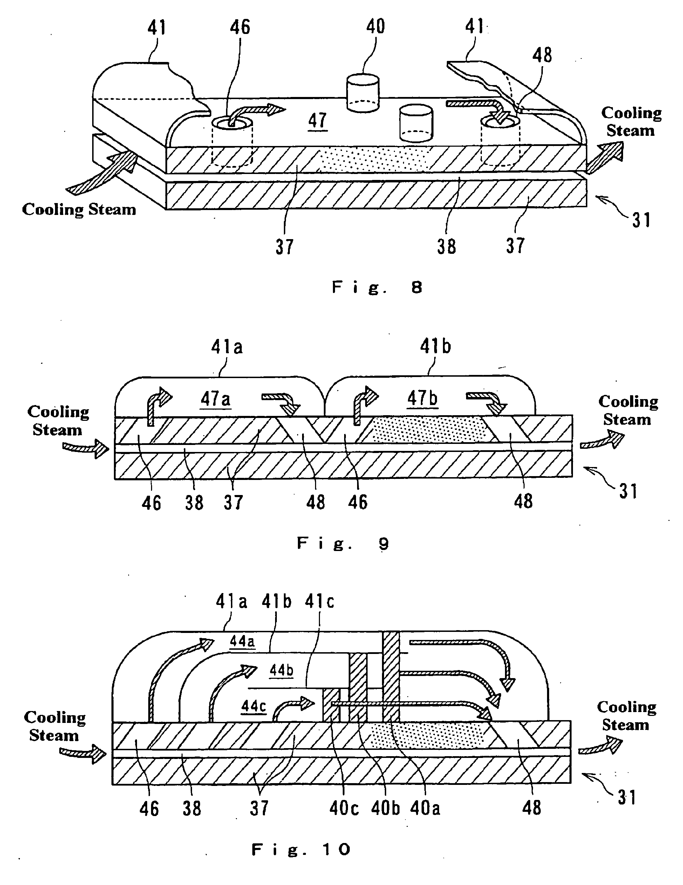

It may be further modified as shown in Fig. 8. Fig. 8 is an enlarged schematic perspective view showing a corresponding part as.the "Y" part shown in Fig. 7. As shown in Fig. 8, A cooling steam inlet port 48, which recovers the cooling steam from the space 47 into the cooling steam path 38, is provided in wall 37 other than cooling steam outlet port 46.

Further, it may be modified to arrange a plurality of cover plates 41a, 41b, ... on whole area of the surface of the wall 37 , with each of cover plate 41a, 41b, ... encloses one of a divided space 47a, 47b, .... In this case, cooling steam inlet port 48 and cooling steam outlet port 46 are preferably provided at each divided space 47a, 47b, ... in the wall 37.

It may also modified, as shown in Fig. 10, that the cover plates 41c, 41b, and 41a are arranged as the distance from the wall 37 may be gradually enlarged from one side to the another by supports 40c, 40b, and 40a. This may form layers of the cover plates 41c, 41b, and 41a, which can be used as outside cooling steam paths 44a, 44b and 44c as the cooling steam from cooling steam outlet port 39 cools both face of cover plates 41b and 41c.

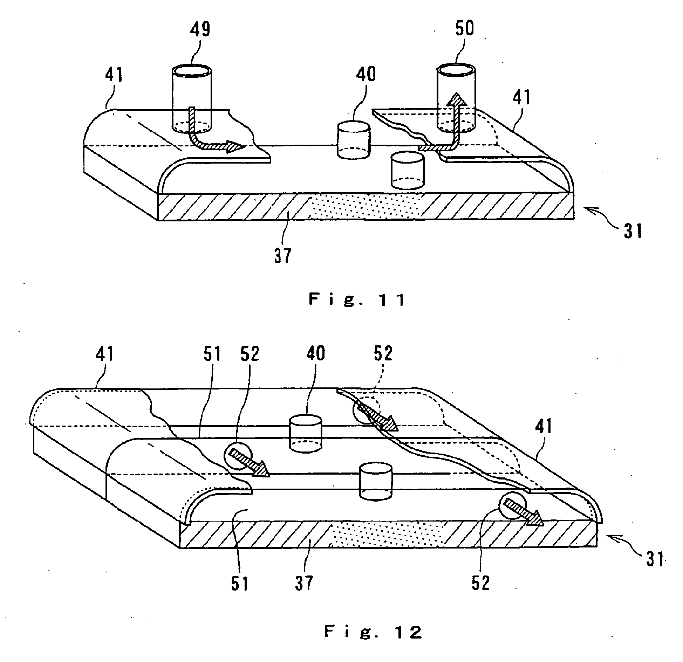

Figs. 11 and 12 are enlarged schematic perspective views showing modifications of the first embodiment wherein the modification according to Fig. 11 is not claimed but represents background that serves for understanding the invention.

In this not claimed modification, cooling steam inlet 49, which supply the cooling steam into the space 47, is provided in the cover plate 41 instead of the wall 37. This enable the cooling steam directly supplied to the space 47. Cooling steam outlet 50 is also provided in cover plate 41. Not shown in Fig. 11, cooling steam path may be provided in the wall 37 of the nozzle box 31.

As shown in Fig. 12 partitions 51 may be provided inside the space 47 to divide the space. In this case, a steam pass opening 52 is provided in each of the partition 51 to supply the cooling steam all over the space 47. At least two (2) partitions 51 are preferably provided so as to divide the space 47 into three (3) parts. In this case, the steam pass openings 52 are preferably alternately arranged with each of the partition 51 respectively. This makes the cooling steam meandering inside the space 47. Thus, the cooling steam may be cool cover plate 41 or wall 37 of nozzle box 31 effectively.

Partitions 51 and steam pass openings 52 may be applicable to above mentioned configurations as referred to Figs. 7, 8 or 10.

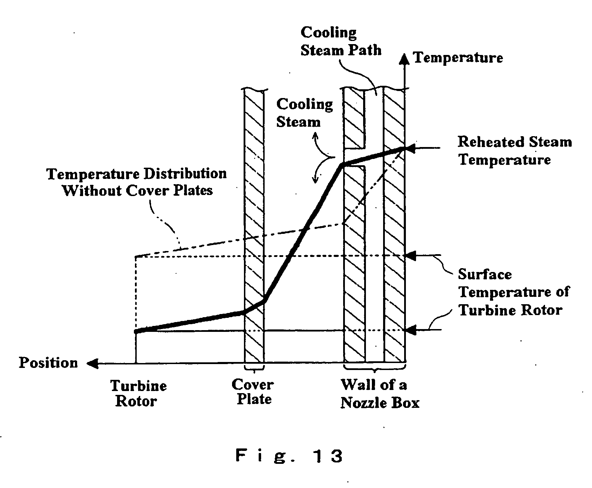

Fig. 13 is a chart of a temperature distribution between a nozzle box and a turbine rotor. In Fig. 13, the difference in the temperature distribution by the existence of the cover plate is compared. The horizontal axis shows position between inside of the wall of the nozzle box and outer surface of the turbine rotor. The vertical axis shows a temperature. A solid line shows when the cover plates are provided, while two-point dashed line shows when the cover plates are not provided.

As shown in Fig. 13, the cover plates are shielding the heat from the high temperature steam supplied to the nozzle box. Thus, a surface temperature of the turbine rotor is lower when the cover plates are provided. It results to weaken a heat stress of the turbine rotor.

As mentioned above, according to this embodiment, the nozzle box is effectively cooled by the cooling steam and the cover plates shield a heat transfer, such as a convection or a radiation, from the high temperature steam. Therefore, the steam turbine may effectively operate with the steam at the higher temperatures, while maintaining the strength of turbine constituent components, such as turbine rotor, despite the high steam temperature of the steam.

In this embodiment, the cooling steam is supplied to the nozzle box in the steam turbine. A supply of the cooling steam in steam turbine plant utilizing a steam turbine mentioned above is explained below.

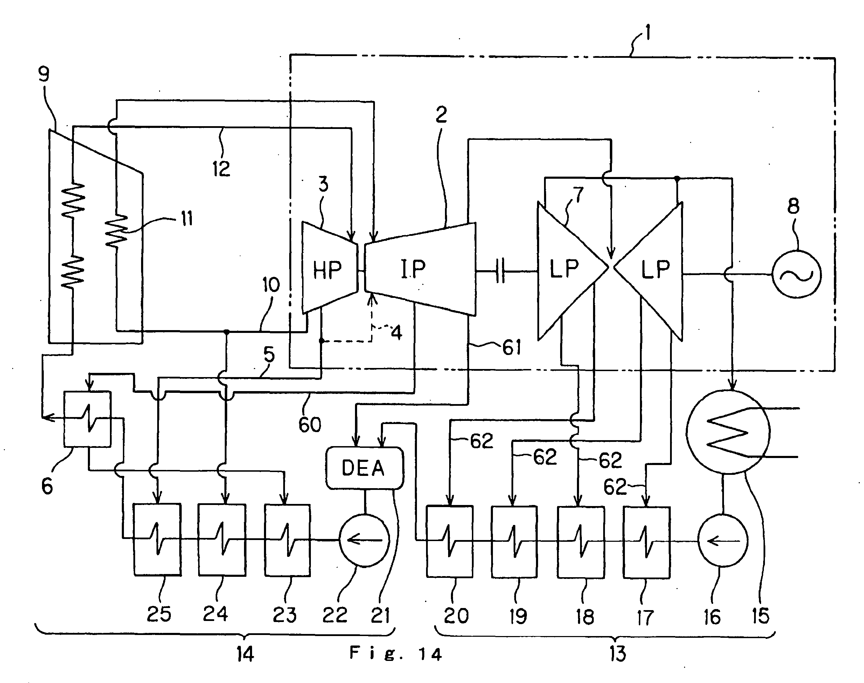

Fig. 14 is a schematic diagram of a example of a steam turbine plant that is suitable to adopt a steam turbine of the embodiment. In Fig. 14, the steam turbine according to the embodiment is applied to the intermediate turbine.

A steam turbine plant includes a steam turbine 1, a boiler 9 as a steam generator, a condensate system 13 and a feedwater system 14.

Steam turbine 1 includes an intermediate pressure turbine 2, a high pressure turbine 3, a low pressure turbine 7 having a double-flow type configuration and a generator 8. Rotating shafts of those intermediate pressure turbine 2, high pressure turbine 3, low pressure turbine 7 and generator 8 are connected each other, steam turbine 1 has a one rotating shaft as a whole.

Boiler 9, as a steam generator, produces high pressure main steam, which is supplied to high pressure turbine 3 through line The main steam expands while it flows through the high pressure turbine 3, performing expansion work that drives high pressure turbine 3. A high pressure steam bleed line 5 is communicatively connected to high pressure turbine 3 at an intermediate stage of high pressure turbine 3, and bleeds steam from high pressure turbine 3.

The main steam expanded in high pressure turbine 3 is discharged from high pressure turbine 3 to a low temperature reheat line 10 as high pressure turbine discharged steam. The high pressure turbine discharged steam is supplied to boiler 9, reheated by a reheater 11 to produce reheated steam (another form of heated steam) having a temperature, for example, of about 700°C or more (1300 or more degrees Fahrenheit). The reheated steam is supplied to intermediate pressure turbine 2 so as to do expansion work and drive intermediate pressure turbine 2. A cooling steam supply line 4 is communicatively connected to intermediate pressure turbine 2 at a point relatively upstream of the intermediate pressure turbine 2. Cooling steam supply line 4 introduces part of the steam bled from the high pressure turbine 3 via high pressure steam bleed line 5 as a cooling steam in intermediate pressure turbine 2. Intermediate pressure steam bleed lines 60 and 61, which bleed steam from intermediate stages of intermediate pressure turbine 2, are connected to intermediate pressure turbine 2.

The reheated steam, as expanded in intermediate pressure turbine 2, is discharged from intermediate pressure turbine 2. This discharged steam is supplied to low pressure turbine 7, where it further expands to drive low pressure turbine 7. In this manner, high pressure turbine 3, intermediate pressure turbine 2, low pressure turbine 7 and generator 8 are all driven by steam. Low pressure steam bleed lines 62, which bleed steam from intermediate stages of low pressure turbine 7, are connected to low pressure turbine 7.

Condensate system 13 includes a condenser 15, a condensate pump 16, a first low pressure feedwater heater 17, a second low pressure feedwater heater 18, a third low pressure feedwater heater 19, and a fourth low pressure feedwater heater 20. Steam discharged from low pressure turbine 7 is introduced and condensed into condensate in condenser 15. The condensate is pumped by condensate pump 16 and flows through the low pressure feedwater heaters 17-20 in order, being heated with steam bled supplied from each of low pressure steam bleed lines 62 that are connected to low pressure turbine 7.

Feedwater system 14 includes a deaerator 21, a feedwater pump 22, a first high pressure feedwater heater 23, a second high pressure feedwater heater 24, a third high pressure feedwater heater 25 and a desuperheater 6 along the stream of the feedwater, downstream from the high pressure feedwater heaters 23-25. The condensate supplied from fourth low pressure feedwater heater 20 of the condensate system 13 is heated and deaerated using deaerator 21, where the heating source is steam bled from the intermediate pressure steam bleed line 61 on a relatively downstream part of intermediate pressure turbine 2. Feedwater is formed in this manner. Desuperheater 6 is arranged at the most downstream side of feedwater system 14. Desuperheater 6 heats feedwater heater using the sensible heat of steam bled in the intermediate pressure steam bleed line 60 connected to a relatively upstream part of intermediate pressure turbine 2. Such steam has a relatively high degree of superheat, as preferable for further heating the feedwater from the third high pressure feedwater heater 25 in feedwater system 14.

The feedwater is pumped by the feedwater pump 22. The water is heated by the first through third high pressure feedwater heaters 23, 24, and 25, in their respective'order. The feedwater from third high pressure feedwater heater 25 is supplied to desuperheater 6, where it is further heated. First high pressure feedwater heater 23 uses steam flowing from desuperheater 6 as a heating source, which has taken the sensible heat from the steam in the intermediate pressure steam bleed line 60 and has been reduced to close to a saturation temperature in desuperheater 6. Second high pressure feedwater heater 24 uses discharged steam from high pressure turbine 3, through line 10, as a heating source. Third high pressure feedwater heater 25 uses steam bled from high pressure steam bleed line 5 connected to an intermediate stage of high pressure turbine 3. With this arrangement, the feedwater flowing through first high pressure feedwater heater 23 to desuperheater 6 is heated and returned as heated feedwater into the boiler 9.

As previously noted, the cooling steam is introduced into intermediate pressure turbine 2 from cooling steam supply line 4. The cooling steam is supplied to the nozzle box and cools the nozzle box and the cover plates by the configuration referred such as Figs. 1 to 12.

In a example shown in Fig. 14, steam bled from high pressure turbine 3 is used for the cooling steam. Steam bled from intermediate pressure turbine 2, steam bled from boiler 9, or any other suitable steam may be used as the cooling steam. The source of the cooling steam may come from any part of the plant that can provide relatively cooler steam. Further, the steam turbine according to the embodiment may be applied to high pressure turbine or any other suitable steam turbine.

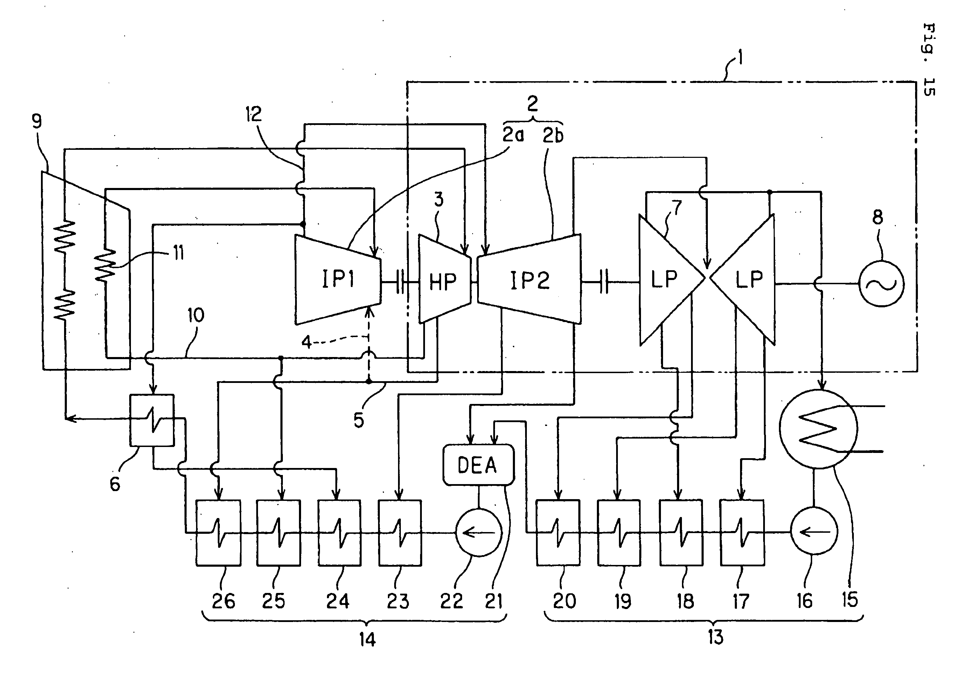

The steam turbine plant according to the embodiment of Fig. 15 has a conventional steam turbine portion 1 including an intermediate-pressure turbine 2 that is divided into a first intermediate-pressure turbine 2a and a second intermediate-pressure turbine 2b. The divided first intermediate-pressure turbine 2a is disposed as a top turbine. Reheated steam having a temperature above 700°C is made to do an expansion work. High-pressure turbine extraction steam from the intermediate stage of a high-pressure turbine 3 of the conventional steam turbine portion 1 is used as cooling steam to provide sufficiently assured strength even if the ultra-high temperature, reheated steam is supplied to the first intermediate-pressure turbine 2a. A steam cooling system 4 for supplying this cooling steam to the first intermediate-pressure turbine 2a via a high-pressure turbine extraction system 5 is mounted. Also, a superheater 6 is mounted such that the exhaust from the intermediate-pressure turbine that has finished the expansion work in the first intermediate-pressure turbine 2a heats supplied water in a feedwater system 14 via an intermediate-pressure turbine exhaust system 12.

The conventional steam turbine portion 1 has the high-pressure turbine 3, the second intermediate-pressure turbine 2b, a low-pressure turbine 7 of double flow type, and a power genertor 8. whose shafts are coupled together. Main steam produced from a boiler 9 is supplied to the high-pressure turbine 3, where an expansion work is done. The high-pressure turbine exhaust that has finished the expansion work is supplied via a low-temperature reheating system 10 to the reheater 11 of the boiler 9, where reheated steam having a temperature above 700°C is created. The created, reheated steam is supplied to the first intermediate-pressure turbine 2a acting as a top turbine.

The first intermediate-pressure turbine 2a causes the reheated steam to do an expansion work. The intermediate-pressure turbine exhaust that has finished the expansion work is supplied to the superheater 6 via the intermediate-pressure turbine exhaust system 12. The remaining is supplied to the second intermediate-pressure turbine 2b of the steam turbine portion 1. The expansion work is again done. The intermediate-pressure turbine exhaust that has finished the expansion work is supplied to the low-pressure turbine 7, where an expansion work is also done. The power generator 8 is driven with the power produced at this time. The first intermediate pressure turbine 2a can be formed as shown in Fig. 1.

Other embodiments of the present claimed invention will be apparent to those skilled in the art from consideration of the specification and practice of the claimed invention disclosed herein. For example, the specific nature and form of cooling passages through the various constituent component may differ, such as to avoid any extensive modification of the components to include particular cooling paths therethrough.

## Claims

1. A steam turbine, comprising:
a casing (32, 33);
a rotor (34) rotatably installed in the casing (32, 33);
a plurality of turbine stages (28) disposed in the turbine (2), at least one of the turbine stages (28) including a turbine nozzle (29) and including a moving blade (30) that is fixed to the rotor (34);
a steam pass including the at least one turbine stage (28) ;
a nozzle box (31), which is placed in a space between the casing (32, 33) and the rotor (34), for providing a heated steam into the steam pass, wherein the nozzle box has a wall (37), **characterized in that** it further comprises:
a cover plate (41, 42), which is arranged along an outer face of the wall of the nozzle box (31);
a cooling steam path (38) provided in the wall (37);
a cooling steam outlet port (39, 46) provided in the wall (37), which passes cooling steam inside the cooling steam path (38) to a space (47) between the wall (37) and the cover plate (41, 42); and
a support (40) which fixes the cover plate (41, 42) in a predetermined distance from the nozzle box (31).

2. The steam turbine according to claim 1, wherein the cover plate (41, 42) intermittently covers the whole surface of the nozzle box (31).

3. The steam turbine according to claim 1, wherein the cover plate (41, 42) encloses the whole surface of the nozzle box (31).

4. The steam turbine according to any of claims 1 to 3, wherein the cover plate (41) is a flat plate.

5. The steam turbine according to any of claims 1 to 3, wherein the cover plate (42) is a wave-shaped plate.

6. The steam turbine according to any of the preceding claims, wherein the cover plate (41, 42) includes a plurality of plates (41a, 41b, 41c), the plates forming layers on the nozzle box (31).

7. The steam turbine according to claims 3 to 6, further comprising:
a cooling steam inlet (49) provided in the wall (37) that supplies the cooling steam into the cooling steam path (38); and
a cooling steam outlet (50) provided in the cover plate (41, 42) that recovers the cooling steam from a space (47) between the wall (37) and the cover plate (41, 42).

8. The steam turbine according to claim 7, further comprising:
a partition (51) that divides a space (47) between the wall (37) and the cover plate (41, 42) into divided spaces;
cooling steam outlet ports (46) which supply the cooling steam into the divided space (47); and
cooling steam inlet ports (48) which recover the cooling steam from the divided space (47) into the cooling steam path (38),
wherein one cooling steam outlet port (46) and one cooling steam inlet port (48) are provided at each divided space.

9. The steam turbine according to claims 3 to 6, wherein the nozzle box (31) further comprises:
a cooling steam inlet port (48), which recovers the cooling steam from the space between the wall (37) and the cover plate (41, 42) into the cooling steam path (38).

10. The steam turbine according to claim 9, further comprising:
a partition (51) that divides the space (47) between the wall (37) and the cover plate (41, 42) into divided spaces;
cooling steam outlet ports (46) that supply the cooling steam into the divided space (47) ; and
cooling steam inlet ports (48) that recover the cooling steam from the divided space (47) into the cooling steam path (38),
wherein one cooling steam outlet port (46) and one cooling steam inlet port (48) are provided at each divided space.

11. The steam turbine according to claims 3 to 6, further comprising:
a partition (51) that divides the space (47) between the wall (37) and the cover plate (41, 42) into divided spaces; and
a steam pass opening (52) provided in the partition (51).

12. The steam turbine according to any of the preceding claims,
having an intermediate-pressure turbine (2) divided into a first intermediate-pressure turbine (2a) and a second intermediate-pressure turbine (2b), the divided first intermediate-pressure turbine (2a) being disposed as a top turbine, said second intermediate-pressure turbine (2b) being disposed as a bottom turbine.

13. The steam turbine according to claim 12, wherein steam from a high-pressure turbine (3) is supplied as cooling steam into the turbine nozzle box (31) accommodated in said first intermediate-pressure turbine (2a), and wherein cover plate (41, 42) is mounted outside said turbine nozzle box (31).

## Patentansprüche

1. Dampfturbine, mit:
einem Gehäuse (32, 33);
einem Rotor (34), der drehbar in dem Gehäuse (32, 33) installiert ist;
mehreren Turbinenstufen (28), die in der Turbine (2) angeordnet sind, wobei zumindest eine der Turbinenstufen (28) eine Turbinendüse (29) aufweist und eine bewegliche Schaufel (30), die an dem Rotor (34) befestigt ist, aufweist;
einem Dampfpass, der die zumindest eine Turbinenstufe (28) umfasst;
einem Düsenkasten (31), der in einem Raum zwischen dem Gehäuse (32, 33) und dem Rotor (34) angeordnet ist, um einen erhitzten Dampf in dem Dampfpass vorzusehen, wobei der Düsenkasten eine Wand (37) aufweist, weiter dadurch charakterisiert, dass er aufweist:
eine Abdeckplatte (41, 42), die entlang einer äußeren Front der Wand des Düsenkastens (31) angeordnet ist;
einen Kühldampfweg (38), der in der Wand (37) vorgesehen ist;
eine Kühldampfauslassöffnung (39, 46), die in der Wand (37) vorgesehen ist, die Kühldampf innerhalb des Kühldampfwegs (38) zu einem Raum (47) zwischen der Wand (37) und der Abdeckplatte (41, 42) hindurchführt; und
eine Halterung (40), welche die Abdeckplatte (41, 42) in einem vorbestimmten Abstand von dem Düsenkasten (31) befestigt.

2. Dampfturbine gemäß Anspruch 1, bei der die Abdeckplatte (41, 42) die gesamte Oberfläche des Düsenkastens (31) sporadisch abdeckt.

3. Dampfturbine gemäß Anspruch 1, bei der die Abdeckplatte (41, 42) die Gesamtoberfläche des Düsenkastens (31) einfasst.

4. Dampfturbine gemäß einem der Ansprüche 1 bis 3, bei der die Abdeckplatte (41) eine flache Platte ist.

5. Dampfturbine gemäß einem der Ansprüche 1 bis 3, bei der die Abdeckplatte (42) eine wellenförmige Platte ist.

6. Dampfturbine gemäß einem der vorangegangenen Ansprüche, bei der die Abdeckplatte (41, 42) mehrere Platten (41a, 41b, 41c) umfasst, wobei die Platten, Schichten auf dem Düsenkasten (31) ausbilden.

7. Dampfturbine gemäß Anspruch 3 bis 6, ferner mit: einem Kühldampfeinlass (49), der in der Wand (37) vorgesehen ist und der den Kühldampf in den Kühldampfweg (38) zuführt; und einem Kühldampfauslass (50), der in der Abdeckplatte (41, 42) vorgesehen ist und der den Kühldampf aus einem Raum (47) zwischen der Wand (37) und der Abdeckplatte (41, 42) wiedergewinnt.

8. Dampfturbine gemäß Anspruch 7, ferner mit:
einer Abtrennung (51), die einen Raum (47) zwischen der Wand (37) und der Abdeckplatte (41, 42) in abgetrennte Räume aufteilt;
Kühldampfauslassöffnungen (46), die den Kühldampf in den abgetrennten Raum (47) zuführen; und
Kühldampfeinlassöffnungen (48), die den Kühldampf aus dem abgetrennten Raum (47) in den Dampfweg (38) wiedergewinnen,
wobei eine Kühldampfauslassöffnung (46) und eine Kühldampfeinlassöffnung (48) an jedem abgetrennten Raum vorgesehen sind.

9. Dampfturbine gemäß Anspruch 3 bis 6, bei welcher der Düsenkasten (31) ferner aufweist:
eine Kühldampfeinlassöffnung (48), die den Kühldampf aus dem Raum zwischen der Wand (37) und der Abdeckplatte (41, 42) in den Kühldampfweg (38) wiedergewinnt.

10. Dampfturbine gemäß Anspruch 9 ferner mit:
einer Abtrennung (51), die den Raum (47) zwischen der Wand (37) und der Abdeckplatte (41, 42) in abgetrennte Räume aufteilt;
Kühldampfauslassöffnungen (46), die den Kühldampf in den getrennten Raum (47) zuführen; und
Kühldampfeinlassöffnungen (48), die den Kühldampf aus dem abgetrennten Raum (47) in den Dampfweg (38) wiedergewinnen,
wobei eine Kühldampfauslassöffnung (46) und eine Kühldampfeinlassöffnung (48) an jedem abgetrennten Raum vorgesehen sind.

11. Dampfturbine gemäß den Ansprüchen 3 bis 6 ferner mit:
einer Abtrennung (51), die den Raum (47) zwischen der Wand (37) und der Abdeckplatte (41, 42) in abgetrennte Räume aufteilt; und
einer Dampfpassöffnung (52), die in der Abtrennung (51) vorgesehen ist.

12. Dampfturbine gemäß einem der vorangegangenen Ansprüche,
mit einer Mitteldruckturbine (2), die in eine erste Mitteldruckturbine (2a) und in eine zweite Mitteldruckturbine (2b) geteilt ist, wobei die geteilte erste Mitteldruckturbine (2a) als eine obere Turbine angeordnet ist, wobei die zweite Mitteldruckturbine (2b) als eine untere Turbine angeordnet ist.

13. Dampfturbine gemäß Anspruch 12, bei der Dampf von einer Hochdruckturbine (3) als Kühldampf in den Düsenkasten (31), der in der ersten Mitteldruckturbine (2a) aufgenommen ist, zugeführt wird, wobei die Abdeckplatte (41, 42) außerhalb des Turbinenkastens (31) angebracht ist.

## Revendications

1. Turbine à vapeur comprenant :
un carter (32, 33) ;
un rotor (34) installé de manière rotative dans le carter (32, 33) ;
une pluralité d'étages de turbine (28) disposés dans la turbine (2), au moins l'un des étages de turbine (28) comprenant une buse de turbine (29) et comprenant une aube mobile (30) qui est fixée sur le rotor (34) ;
un passage de vapeur comprenant le au moins un étage de turbine (28) ;
un distributeur de turbine (31) qui est placé dans un espace situé entre le carter (32, 33) et le rotor (34) pour fournir une vapeur chauffée dans le passage de vapeur, dans laquelle le distributeur de turbine a une paroi (37),
**caractérisée en ce qu'**elle comprend en outre :
une plaque de couvercle (41, 42) qui est agencée le long d'une face externe de la paroi du distributeur de turbine (31) ;
une trajectoire de vapeur de refroidissement (38) prévue dans la paroi (37) ;
un orifice de sortie de vapeur de refroidissement (39, 46) prévu dans la paroi (37) qui fait passer la vapeur de refroidissement à l'intérieur de la trajectoire de vapeur de refroidissement (38) à un espace (47) entre la paroi (37) et la plaque de couvercle (41, 42) ; et
un support (40) qui fixe la plaque de couvercle (41, 42) à une distance prédéterminée du distributeur de turbine (31).

2. Turbine à vapeur selon la revendication 1, dans laquelle la plaque de couvercle (41, 42) recouvre par intermittence toute la surface du distributeur de turbine (31).

3. Turbine à vapeur selon la revendication 1, dans laquelle la plaque de couvercle (41, 42) renferme toute la surface du distributeur de turbine (31).

4. Turbine à vapeur selon l'une quelconque des revendications 1 à 3, dans laquelle la plaque de couvercle (41) est une plaque plate.

5. Turbine à vapeur selon l'une quelconque des revendications 1 à 3, dans laquelle la plaque de couvercle (42) est une plaque en forme d'onde.

6. Turbine à vapeur selon l'une quelconque des revendications précédentes, dans laquelle la plaque de couvercle (41, 42) comprend une pluralité de plaques (41a, 41b, 41c), les plaques formant des couches sur le distributeur de turbine (31).

7. Turbine à vapeur selon les revendications 3 à 6, comprenant en outre :
une entrée de vapeur de refroidissement (49) prévue dans la paroi (37) qui amène la vapeur de refroidissement dans la trajectoire de vapeur de refroidissement (38) ; et
une sortie de vapeur de refroidissement (50) prévue dans la plaque de couvercle (41, 42) qui recouvre la vapeur de refroidissement d'un espace (47) situé entre la paroi (37) et la plaque de couvercle (41, 42).

8. Turbine à vapeur selon la revendication 7, comprenant en outre :
une séparation (51) qui divise un espace (47) entre la paroi (37) et la plaque de couvercle (41, 42) en espaces divisés ;
des orifices de sortie de vapeur de refroidissement (46) qui amènent la vapeur de refroidissement dans l'espace (47) divisé ; et
des orifices d'entrée de vapeur de refroidissement (48) qui récupèrent la vapeur de refroidissement à partir de l'espace (47) divisé dans la trajectoire de vapeur de refroidissement (38),
dans laquelle un orifice de sortie de vapeur de refroidissement (46) et un orifice d'entrée de vapeur de refroidissement (48) sont prévus au niveau de chaque espace divisé.

9. Turbine à vapeur selon les revendications 3 à 6, dans laquelle le distributeur de turbine (31) comprend en outre :
un orifice d'entrée de vapeur de refroidissement (48) qui récupère la vapeur de refroidissement à partir de l'espace situé entre la paroi (37) et la plaque de couvercle (41, 42) dans la trajectoire de vapeur de refroidissement (38).

10. Turbine à vapeur selon la revendication 9, comprenant en outre :
une séparation (51) qui divise l'espace (47) entre la paroi (37) et la plaque de couvercle (41, 42) en espaces divisés ;
des orifices de sortie de vapeur de refroidissement (46) qui amènent la vapeur de refroidissement dans l'espace (47) divisé ; et
des orifices d'entrée de vapeur de refroidissement (48) qui récupèrent la vapeur de refroidissement de l'espace (47) divisé dans la trajectoire de vapeur de refroidissement (38),
dans laquelle un orifice de sortie de vapeur de refroidissement (46) et un orifice d'entrée de vapeur de refroidissement (48) sont prévus au niveau de chaque espace divisé.

11. Turbine à vapeur selon les revendications 3 à 6, comprenant en outre :
une cloison (51) qui divise l'espace (47) entre la paroi (37) et la plaque de couvercle (41, 42) en espaces divisés ; et
une ouverture de passage de vapeur (52) prévue dans la cloison (51).

12. Turbine à vapeur selon l'une quelconque des revendications précédentes,
ayant une turbine à pression intermédiaire (2) divisée en une première turbine à pression intermédiaire (2a) et en une seconde turbine à pression intermédiaire (2b), la première turbine à pression intermédiaire (2a) étant disposée sous forme de turbine supérieure, ladite seconde turbine à pression intermédiaire (2b) étant disposée sous forme de turbine inférieure.

13. Turbine à vapeur selon la revendication 12, dans laquelle la vapeur provenant d'une turbine à haute pression (3) est fournie en tant que vapeur de refroidissement dans le distributeur de turbine (31) logé dans ladite première turbine à pression intermédiaire (2a), et dans laquelle la plaque de couvercle (41, 42) est montée à l'extérieur dudit distributeur de turbine (31).
